# EUROPEAN PATENT APPLICATION

(11) **EP 3 376 553 A1**
(43) Date of publication of application: **19.09.2018**
(21) Application number: 17161706.1
(22) Date of filing: 17.03.2017
(51) Int. Cl.: H01M 2/02, H01G 11/54, H01M 6/40, H01M 14/00, H01M 4/583, H01M 10/04

(54) **AN APPARATUS AND ASSOCIATED METHODS FOR ELECTRICAL STORAGE**

(71) Applicant: Nokia Technologies Oy, 02610 Espoo (FI)
(72) Inventor: Zarra, Salvatore, Cambridge, CB4 1DT (GB); Sassi, Ugo, Cambridge, CB3 0FA (GB)
(74) Representative: Potter Clarkson LLP

(57) **Abstract**

An apparatus comprising:
an energy harvesting substrate configured to generate electrical energy in response to a stimulus; and
an energy storage component printed onto and supported by the energy harvesting substrate,
wherein the energy harvesting substrate and energy storage component are configured such that the electrical energy generated by the energy harvesting substrate in response to the stimulus is used to charge the energy storage component.

## Description

### Technical Field

The present disclosure relates to the field of electrical storage (including, for example, batteries, supercapacitors and battery-capacitor hybrids), associated methods and apparatus, and in particular concerns an apparatus comprising an energy storage component formed on and supported by an energy harvesting substrate such that electrical energy generated by the energy harvesting substrate in response to a stimulus is used to charge the energy storage component. Certain disclosed example aspects/embodiments relate to portable electronic devices, in particular, so-called hand-portable electronic devices which may be hand-held in use (although they may be placed in a cradle in use). Such hand-portable electronic devices include so-called Personal Digital Assistants (PDAs), smartwatches and tablet PCs.

The portable electronic devices/apparatus according to one or more disclosed example aspects/embodiments may provide one or more audio/text/video communication functions (e.g. tele-communication, video-communication, and/or text transmission, Short Message Service (SMS)/ Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Research is currently being done to develop smaller electrical storage cells having a greater storage capacity than existing storage cells for use in modern electronic devices.

One or more aspects/embodiments of the present disclosure may or may not address this issue.

The listing or discussion of a prior-published document or any background in this specification should not necessarily be taken as an acknowledgement that the document or background is part of the state of the art or is common general knowledge.

### Summary

According to a first aspect, there is provided an apparatus comprising:
an energy harvesting substrate configured to generate electrical energy in response to a stimulus; and
an energy storage component printed onto and supported by the energy harvesting substrate,
wherein the energy harvesting substrate and energy storage component are configured such that the electrical energy generated by the energy harvesting substrate in response to the stimulus is used to charge the energy storage component.

The energy storage component may be printed directly or indirectly onto the energy harvesting substrate.

The energy storage component may be one or more of a battery, a capacitor and a battery-capacitor hybrid.

The energy storage component may be a graphene oxide-based battery.

The graphene oxide-based battery may comprise first and second electrodes separated by an electrolyte, the electrolyte comprising graphene oxide and having an ionic conductivity which is dependent upon the presence and amount of water.

The electrolyte may be a solid or gel electrolyte.

The electrolyte may comprise a polymer such as Nafion.

The graphene oxide-based battery may comprise first and second electrodes, the first electrode comprising graphene oxide and configured to generate protons in the presence of water to produce a potential difference between the first and second electrodes.

The first and second electrodes may comprise respective charge collectors.

The graphene oxide-based battery may be contained within a water-permeable housing configured to enable exposure of the graphene oxide-based battery to water from the surrounding environment.

The graphene oxide-based battery may comprise a water source.

The water source may be a hydrogel.

The graphene oxide-based battery may be contained within a water-impermeable housing configured to prevent exposure of the graphene oxide-based battery to water from the surrounding environment.

The energy harvesting substrate may form at least part of a circuit board. In this scenario, the energy harvesting substrate may comprise electrical connections and possibly one or more further components.

The energy harvesting substrate may be one or more of a piezoelectric substrate configured to generate electrical energy in response to stress, a pyroelectric substrate configured to generate electrical energy in response to heat and a solar cell configured to generate electrical energy in response to light.

The piezoelectric substrate may comprise an organic or inorganic piezoelectric material.

The organic piezoelectric material may comprise one or more of polyvinylidene fluoride and poly(vinylidene fluoride-trifluoroethylene).

The inorganic piezoelectric material may comprise one or more of lead zirconate titanate, barium titanate and zinc oxide.

The piezoelectric substrate may comprise one or more of a polymer and paper.

The pyroelectric substrate may comprise one or more of gallium nitride, caesium nitrate, polyvinyl fluoride, phenylpyridine, cobalt phthalocyanine and lithium tantalate.

The solar cell may comprise one or more of silicon, gallium arsenide, gallium indium phosphide, germanium, lead sulfide, lead selenide, cadmium selenide, cadmium sulfide, indium arsenide and indium phosphide.

The energy harvesting substrate maybe substantially resilient.

The energy harvesting substrate may be configured to generate an AC signal in response to the stimulus, and the apparatus may comprise a rectifier configured to convert the AC signal into a DC signal which is suitable for charging the energy storage component.

The rectifier may be formed on (e.g. using a printing technique) and supported by the energy harvesting substrate.

The rectifier may be a half-wave rectifier or a full-wave rectifier.

The half-wave rectifier may comprise a single diode.

The full-wave rectifier may comprise four diodes in a bridge configuration.

The apparatus may be one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a sensor device, a wearable device, a health monitor, and a module for one or more of the same.

According to a second aspect, there is provided an apparatus comprising:
an energy harvesting substrate configured to generate electrical energy in response to a stimulus; and
an energy storage component formed on and supported by the energy harvesting substrate,
wherein the energy harvesting substrate and energy storage component are configured such that the electrical energy generated by the energy harvesting substrate in response to the stimulus is used to charge the energy storage component.

The various sub-aspects mentioned above in relation to the apparatus of the first aspect are also applicable to the apparatus of the second aspect.

Furthermore, the energy storage component of the apparatus of the second aspect may be formed on the energy harvesting substrate using any existing fabrication processes.

According to a further aspect, there is provided a method of making an apparatus comprising an energy harvesting substrate and an energy storage component, the method comprising:
printing an energy storage component onto an energy harvesting substrate so that the energy storage component is supported by the energy harvesting substrate, the energy harvesting substrate configured to generate electrical energy in response to a stimulus; and
configuring the energy harvesting substrate and energy storage component such that the electrical energy generated by the energy harvesting substrate in response to the stimulus is used to charge the energy storage component.

According to a further aspect, there is provided a method of using an apparatus,
the apparatus comprising an energy harvesting substrate configured to generate electrical energy in response to a stimulus, and an energy storage component printed onto and supported by the energy harvesting substrate, wherein the energy harvesting substrate and energy storage component are configured such that the electrical energy generated by the energy harvesting substrate in response to the stimulus is used to charge the energy storage component,
the method comprising charging the energy storage component using the electrical energy generated by the energy harvesting substrate in response to the stimulus.

The steps of any method disclosed herein do not have to be performed in the exact order disclosed, unless explicitly stated or understood by the skilled person.

Corresponding computer programs (which may or may not be recorded on a carrier) for implementing one or more of the methods disclosed herein are also within the present disclosure and encompassed by one or more of the described example embodiments.

One or more of the computer programs may, when run on a computer, cause the computer to configure any apparatus, including a battery, circuit, controller, or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

One or more of the computer programs may be provided on a computer readable medium, which may be a physical computer readable medium such as a disc or a memory device, or may be embodied as a transient signal. Such a transient signal may be a network download, including an internet download.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

The above summary is intended to be merely exemplary and non-limiting.

### Brief Description of the Figures

A description is now given, by way of example only, with reference to the accompanying drawings, in which:-
Figure 1 shows one example of the present apparatus in cross-section;
Figure 2a shows one example of the energy storage component of the present apparatus in cross-section;
Figure 2b shows the redox reactions involved in the apparatus of Figure 2a;
Figure 3a shows another example of the energy storage component of the present apparatus in cross-section;
Figure 3b shows a perspective view of the energy storage component of Figure 3a;
Figure 4a shows a circuit diagram representing one example of the present apparatus comprising a half-wave rectifier;
Figure 4b shows a circuit diagram representing another example of the present apparatus comprising a full-wave rectifier;
Figure 5 shows another example of the present apparatus in cross-section;
Figure 6 shows a perspective view of the apparatus of Figure 5;
Figure 7 shows a cross-sectional view of the apparatus of Figures 5 and 6 identifying the various circuit components;
Figure 8 shows another example of the present apparatus;
Figure 9 shows a method of making the present apparatus;
Figure 10 shows a method of using the present apparatus; and
Figure 11 shows a computer-readable medium comprising a computer program configured to perform, control or enable one or more of the method steps of Figure 9 or 10.

### Description of Specific Aspects/Embodiments

Battery life is an important consideration for portable electronic devices and sensors. Energy harvesting components have been developed to provide a renewable source of electrical energy to help address this issue. Such components, however, are often space-consuming and can also limit design freedom due to their specific form factor or need to be positioned at certain locations on or within the device.

There will now be described an apparatus and associated methods that may address this issue.

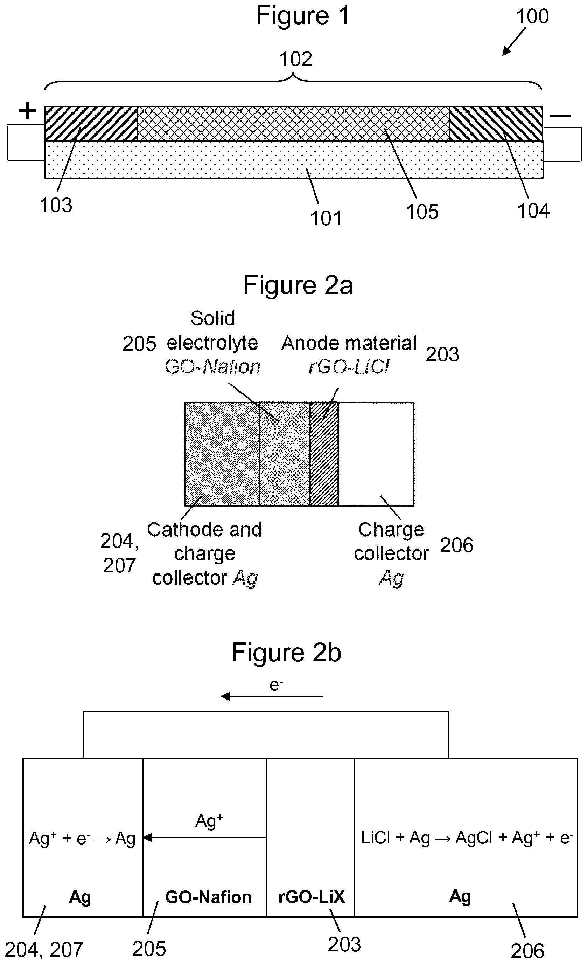

Figure 1 shows one example of the present apparatus 100. The apparatus 100 comprises an energy harvesting substrate 101 configured to generate electrical energy in response to a stimulus, and an energy storage component 102 formed on and supported by the energy harvesting substrate 101. In this example, the energy storage component 102 comprises first 103 and second 104 electrodes separated by an electrolyte 105. The energy harvesting substrate 101 and energy storage component 102 are configured such that the electrical energy generated by the energy harvesting substrate 101 in response to the stimulus is used to charge the energy storage component 102.

Forming the energy storage component 102 on the energy harvesting substrate 101 results in greater integration of the energy storage 102 and energy harvesting 101 components and simplifies fabrication. Furthermore, by configuring the energy harvesting substrate 101 and energy storage component 102 such that the electrical energy generated by the energy harvesting substrate 101 is used to charge the energy storage component 102, the electrical energy generated in response to the stimulus can be stored for later use.

The apparatus 100 may form at least a module of an energy autonomous wireless sensor for the Internet of things (IoT) in which the energy generated by the energy harvesting substrate 101 and stored by the energy storage component 102 could mitigate the increase in network energy consumption associated with the interconnected devices. Such a sensor could have a lifetime of over 10 years.

The energy storage component 102 may be one or more of a battery, a capacitor and a battery-capacitor hybrid. For instance, the energy storage component 102 may be a graphene oxide-based battery.

Figure 2a shows one example of a graphene oxide-based battery. The graphene oxide-based battery comprises first 203 and second 204 electrodes, an electrolyte 205 configured to enable a flow of ions between the first 203 and second 204 electrodes, and respective charge collectors 206, 207 in contact with the first 203 and second 204 electrodes configured to provide an electrical path between the respective electrode 203, 204 and an external circuit.

The first electrode 203 serves as the anode of the battery, and comprises a composite of a halide salt and a conductive carbon-based material. The halide salt can be any salt comprising a halogen, and may comprise an alkali metal. The conductive carbon-based material may comprise any ionically and/or electrically conductive material comprising carbon which mixes with a halide salt to form a composite (e.g. graphene or reduced graphene oxide). The conductive carbon-based material may facilitate the transfer of ions and/or electrons.

The second electrode 204 serves as the cathode of the battery and comprises a metal (e.g. gold, silver, copper, aluminium, zinc or alloys thereof). The charge collectors 206, 207 also comprise a metal. The metal used for the charge collectors 206, 207 may be the same as the metal used for the second electrode 204 or different to the metal used for the second electrode 204. Furthermore, the charge collectors 206, 207 may comprise the same or different metals to each other. The specific metals used may be dependent upon the materials used to form the first 203 and second 204 electrodes.

A key aspect of this particular type of battery is that the electrolyte 205 comprises graphene oxide, and thus, has an ionic conductivity which is dependent upon the presence and amount of water. In general, such batteries require water to enable the transport of ions between the first 203 and second 204 electrodes. This water may come from the air in the surrounding environment (i.e. water vapour from ambient humidity). In this scenario, the battery may be left uncovered/unsealed, it may be contained within a water-permeable housing, or it may be contained within a housing having a watertight seal which is configured to be opened one or more times as required. The watertight seal can be used to prevent any chemical reactions from occurring within the battery when it is disconnected from the external circuit. This reduces degradation of the battery and increases its shelf-life.

Some electrolytes 205 comprising graphene oxide require a relative humidity of 30-70% to conduct ions sufficiently to enable successful operation of the battery. Although normal ambient conditions are 50-70% relative humidity, there may be situations when the relative humidity drops below 30%. To address this issue, the battery may comprise a water source (e.g. sponge or a hydrogel configured to release water vapour) in fluid-communication with the electrolyte 205. In this scenario, the battery may be contained within a water-impermeable housing configured to prevent exposure of the electrolyte 205 to water from the surrounding environment to maintain a substantially constant supply of water, and thus, a substantially constant output voltage (although it could also be contained within a water-permeable housing so that the ambient humidity can supplement the water source).

The electrolyte 205 may be a solid or gel electrolyte. For example, the electrolyte 205 may comprise an ionically conductive polymer such as Nafion. The graphene oxide may be provided within the polymer to form a composite material.

In the example shown in Figure 2a, the first electrode 203 comprises a composite of reduced graphene oxide and lithium chloride, the second electrode 204 and charge collectors 206, 207 comprise silver, and the electrolyte 205 comprises a composite of graphene oxide and Nafion.

Figure 2b shows the redox reactions which take place when the battery of Figure 2a is connected to the external circuit. At the anode side, the lithium chloride of the first electrode 203 reacts with the silver of the adjacent charge collector 206 to form silver chloride, a silver cation and a free electron. The silver cation then conducts through the electrolyte 205 to the second electrode 204 (cathode) while the free electron flows around the external circuit from the charge collector 206 of the anode 203 to the charge collector 207 of the cathode 205. At the cathode side 205, the silver cation recombines with the free electron to form silver metal.

Another type of graphene oxide-based battery that may be used with the present apparatus is a proton battery. The energy generation mechanism involves the degradation of graphene oxide when in contact with water. As with the previous example, the water may be contained within the battery or it may come from the surrounding environment (e.g. in the form of air humidity).

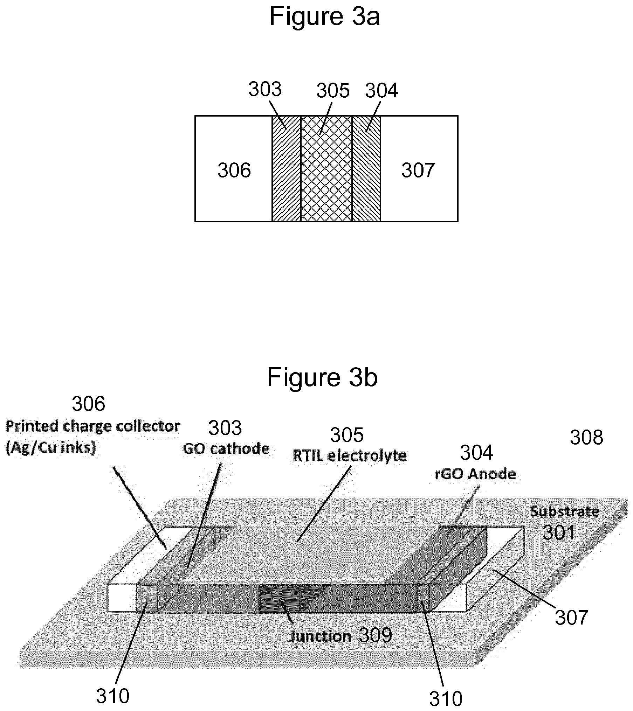

Figures 3a and 3b show one example of a graphene oxide-based proton battery in cross-section and perspective view, respectively. The battery comprises a first electrode 303, a second electrode 304 and an electrolyte 305. The first electrode 303 comprises graphene oxide and is configured to generate protons in the presence of water to produce a potential difference between the first 303 and second 304 electrodes. The electrolyte 305 is configured to enable the generated protons to flow from the first electrode 303 to the second electrode 304 when the first 303 and second 304 electrodes are connected by an external circuit (not shown), e.g. during use of the potential difference.

In this example, the electrolyte 305 comprises a room-temperature ionic fluid configured to absorb water from the surrounding environment 308 and deliver said water to the first electrode 303 to facilitate the generation of protons. This feature has been found to boost both the storage capacity and output voltage of the battery, and also allows the battery to be discharged at higher currents.

As shown in Figure 3b, the first 303 and second 304 electrodes are configured to form a junction 309 with one another at an interface therebetween (e.g. where the electrode materials intermix and/or overlie one another), and the electrolyte 305 is in contact with the junction 309 of the first 303 and second 304 electrodes. This configuration can be produced using a relatively simple printing process. Furthermore, the contact between the electrolyte 305 and the electrode junction 309 helps to ensure that the generated protons are able flow between the first 303 and second 304 electrodes.

The battery may be configured to allow one or both of the first electrode 303 and electrolyte 305 to be exposed to water (vapour) in the surrounding environment 308. In practice, this could be achieved for example by leaving the battery uncovered/unsealed, containing the battery within a water and/or air-permeable material if a protective casing is required, or by providing a casing for the battery with a watertight seal which is configured to be opened one or more times as required. The ability to expose the electrolyte 305 to water in the surrounding environment 308 is necessary in order to benefit from the enhanced electrical properties of the battery, because the water can be considered to fuel the generation of protons. In some cases, the battery may also comprise a water source so that protons (and therefore a potential difference) can be produced even when the humidity of the surrounding environment 308 is relatively low. For example, the battery may comprise a water-absorbing material (such as sponge or a hydrogel configured to release water vapour) in fluid-communication with the first electrode 303 and/or electrolyte 305 for this purpose.

In the example shown in Figure 3b, the apparatus 201 also comprises a respective charge collector 306, 307 in contact with the first 303 and second 304 electrodes configured to provide an electrical path between the respective electrode 303, 304 and the external circuit (not shown). One or both of these charge collectors 306, 307 may comprise at least one of a metal, an alloy, gold, silver, copper, aluminium, steel, and indium tin oxide. Figure 3b also shows regions of overlap 310 between the charge collectors 306, 307 and their associated electrodes 303, 304. Such regions 310 may be produced, for example, if the electrode 303, 304 and/or charge collector 306, 307 materials are deposited using a printing process.

The energy harvesting substrate 301 is also shown. As can be seen, the energy harvesting substrate 301 is configured to support the electrodes 303, 304, electrolyte 305 and charge collectors 306, 307. The supporting substrate 301 is particularly useful when the various components are formed using a printing process, because printable materials (e.g. inks, liquids and gels) tend not to be self-supporting, at least until they have been dried or cured.

As mentioned above, the first electrode 303 comprises graphene oxide which reacts with the water to generate protons. In the illustrated example, the second electrode 304 comprises reduced graphene oxide, but it could comprise one or more of graphene oxide, reduced graphene oxide, potassium hydroxide, poly(3,4-ethylenedioxythiophene) polystyrene sulfonate (PEDOT:PSS), a base, and a conducting polymer. In some examples, the first 303 and second 304 electrodes may be formed from first and second respective graphene oxide inks. In this scenario, the first graphene oxide ink would typically have a lower pH (e.g. a pH of 1-4) than the second graphene oxide ink (e.g. a pH of 13-14). The pH difference of the inks is advantageous because it encourages the transfer of protons from the first electrode 303 to the second electrode 304 via an acid-base reaction at the junction 309 of the electrodes 303, 304.

The room-temperature ionic fluid of the electrolyte 305 may be a gel at room temperature (+20°C to +27°C). To achieve this, the fluid may comprise cations and anions wherein the cations are substantially larger in size than the anions (e.g. having a radius which is up to 2, 3, 4, 5 or 10 times larger than that of the anions). The difference in size between the cations and anions can prevent the fluid from forming a lattice at room temperature thus enabling the electrolyte 305 to maintain its fluid state. In some cases, the room-temperature ionic fluid may also be a gel at temperatures outside of the above "room temperature" range. For example, it may be a gel at temperatures of -100°C to +100°C, -50°C to +50°C, and/or +15°C to +35°C. Advantageously, the room-temperature ionic fluid would be in its gel form at all operating temperatures of the apparatus to help ensure its proton conductivity.

The electrolyte 305 may comprise any room-temperature ionic fluids which are hydrophilic and ionically conductive. Suitable examples include triethylsulfonium bis(trifluoromethylsulfonyl)imide ([SET3][TFSI]), 1-buthyl-3-methyl-imidazolium ([BMIM][CI]), and trioctylmethylammonium bis(trifluoromethylsulfonyl)imide ([OMA][TFSI]). The electrolyte 305 may further comprise one or more salts configured to aid the flow of protons from the first electrode 303 to the second electrode 304 and/or enhance the absorption of water by the room-temperature ionic fluid from the surrounding environment 308. The addition of the one or more salts therefore facilitates the generation and conduction of protons further thereby allowing even more electrical energy to be produced by the battery. Suitable salts include lithium bis(trifluoromethylsulfonyl)imide ([Li][TFSI]), lithium chloride and sodium chloride.

As mentioned above, the energy harvesting substrate on which the energy storage component is formed is configured to generate electrical energy in response to a stimulus which is then used to charge the energy storage component. In this respect, the energy harvesting substrate may be one or more of a piezoelectric substrate configured to generate electrical energy in response to stress, a pyroelectric substrate configured to generate electrical energy in response to heat, and a solar cell configured to generate electrical energy in response to light. The piezoelectric substrate may comprise an organic (e.g. polyvinylidene fluoride and/or poly(vinylidene fluoride-trifluoroethylene) or inorganic (e.g. lead zirconate titanate, barium titanate and/or zinc oxide) piezoelectric material, a polymer or paper. The pyroelectric substrate may comprise one or more of gallium nitride, caesium nitrate, polyvinyl fluoride, phenylpyridine, cobalt phthalocyanine and lithium tantalate. The solar cell may comprise one or more of silicon, gallium arsenide, gallium indium phosphide, germanium, lead sulfide, lead selenide, cadmium selenide, cadmium sulfide, indium arsenide and indium phosphide.

In some examples, the energy harvesting substrate may be substantially resilient (e.g. one or more of substantially reversibly flexible, stretchable and compressible). This may be particularly useful for wearable applications integrated into clothing where a piezoelectric substrate could be used to generate electrical energy in response to movements of the wearer which can then be used to charge the energy storage component for powering health monitoring, telecommunications or personal entertainment (e.g. audio/video) devices. The resilience of the substrate facilitates deformation and reduces the rigidity of the apparatus for greater comfort.

In some cases, the energy harvesting substrate may be configured to generate an AC signal (voltage or current) in response to the stimulus which needs to be converted into a DC signal which is suitable for charging the energy storage component. AC signals may be generated by any energy harvesting substrate that produces a signal which varies with time. For example, a piezoelectric substrate may generate a positive voltage when it is bent in one direction and a negative voltage when it is bent in the opposite direction. The apparatus may comprise a half-wave or full-wave rectifier configured to convert the AC signal into a DC signal.

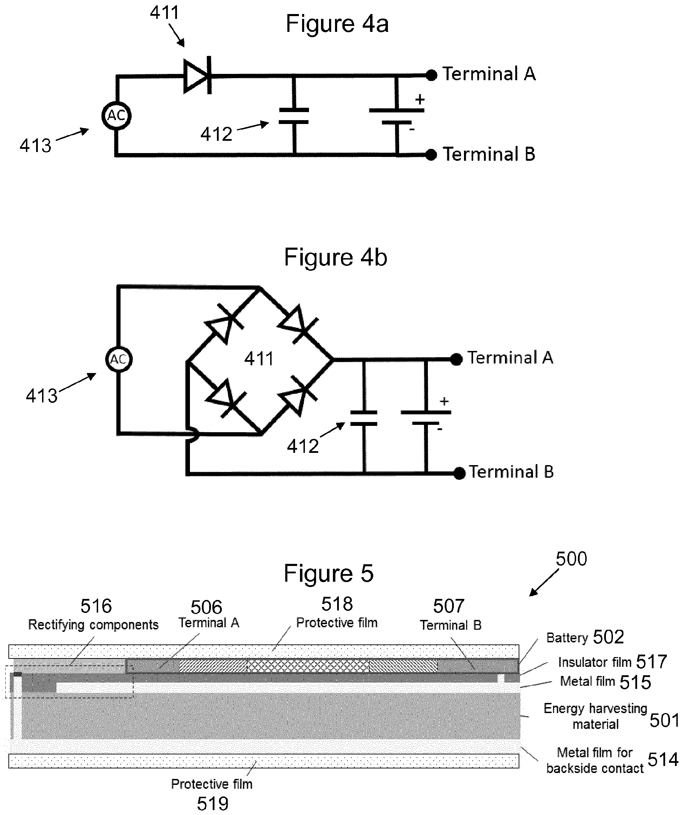

Figure 4a shows a circuit diagram representing one example of the present apparatus comprising a half-wave rectifier. In half-wave rectification of a single-phase supply, either the positive or negative half of the AC signal is passed, while the other half is blocked. Since only one half of the input waveform reaches the output, the mean output signal is lower in magnitude than with full-wave rectification. All rectifiers yield a unidirectional but pulsating DC signal, but half-wave rectifiers produce more ripple than full-wave rectifiers, and more filtering is typically required to eliminate harmonics of the AC frequency from the output. In this example, the half-wave rectifier comprises a single diode 411 and a capacitor 412 with a single-phase supply 413. For a three-phase supply, three diodes may be used.

Figure 4b shows a circuit diagram representing another example of the present apparatus comprising a full-wave rectifier. A full-wave rectifier converts the whole of the input waveform to one of constant polarity (positive or negative) at its output. Full-wave rectification converts both polarities of the input waveform to a pulsating DC signal, and therefore yields a higher average output than half-wave rectification. Full-wave rectifiers therefore enable a greater proportion of the energy generated by the energy harvesting substrate to be used for charging the energy storage component. In this example, the full-wave rectifier comprises four diodes 411 in a bridge configuration in combination with a capacitor 412. Alternatively, two diodes and a centre-tapped transformer could be used instead.

Figure 5 shows another example of the present apparatus 500 in cross-section. In this example, first 514 and second 515 metal layers for charge collection are deposited on opposing surfaces of the energy harvesting substrate 501 and are connected to rectifying components 516 to convert any AC signal generated by the energy harvesting substrate 501 to a DC signal. The DC signal is then fed to an energy storage component 502 which is formed on top of the energy harvesting substrate 501. The energy storage component 502 comprises first 503 and second 504 electrodes separated by an electrolyte 505, and respective charge collectors 506, 507 in contact with the first 503 and second 504 electrodes. As shown here, an electrically insulating layer 517 is deposited between the upper metal layer 515 and the energy storage component 502 to prevent short-circuiting of the electrical storage component 502 (e.g. via the first 503 and second 504 electrodes or their respective charge collectors 506, 507). The apparatus 500 also comprises respective layers of protective material 518, 519 on its upper and lower surfaces to prevent exposure of the components sandwiched therebetween to the external environment.

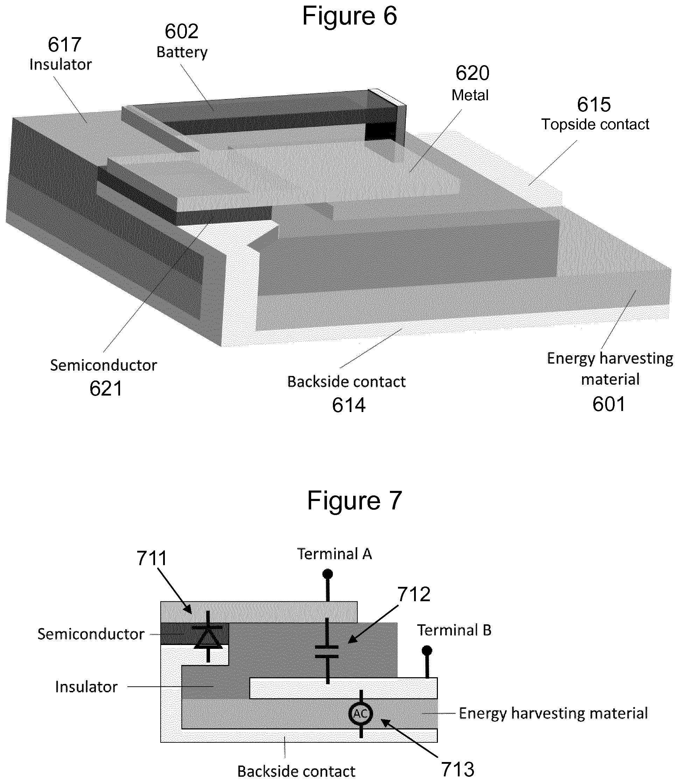

Figure 6 shows a perspective view of the apparatus of Figure 5 showing greater details of the rectifying components. As can be seen from this figure, the first metal layer 614 on the lower surface of the energy harvesting substrate 601 is connected to both the electrically insulating layer 617 and a semiconductor layer 621 formed on top of the electrically insulating layer 617. A third layer of metal 620, which is different from the first 614 and second 615 layers of metal, is formed on top of the electrically insulating 617 and semiconductor 621 layers and connected to one of the charge collectors of the energy storage component 602. The second layer of metal 615 on the upper surface of the energy harvesting substrate 601 is connected to the other charge collector of the energy storage component 602. The layered stack comprising the first metal layer 614, semiconductor layer 621 and third metal layer 620 forms a diode, and the layered stack comprising the second metal layer 615, electrically insulating layer 617 and third metal layer 620 forms a capacitor.

Figure 7 shows a cross-sectional view of the apparatus of Figures 5 and 6 identifying the various circuit components. As shown, the energy harvesting substrate forms an AC signal source 713, while the diode 711 and capacitor 712 together form a half-wave rectifier which converts the AC signal to a DC signal which is suitable for charging the energy storage component.

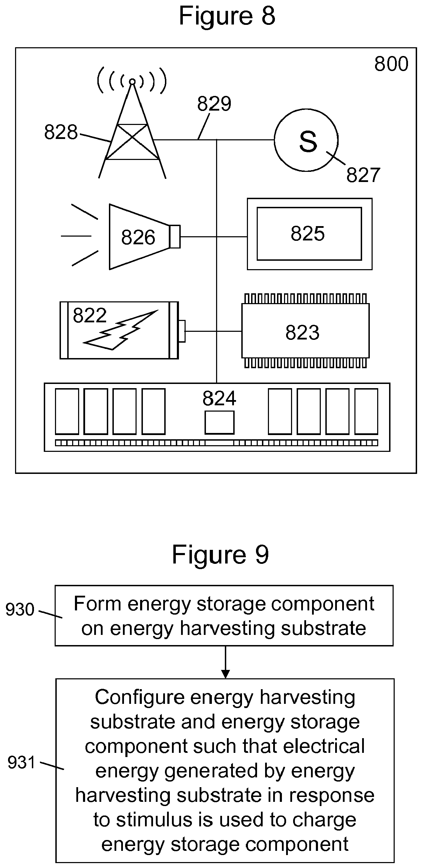

Figure 8 shows another example of the present apparatus 800. In this example, the apparatus comprises some or all of the components described herein (shown in Figure 5 as an electrical storage device 822), a processor 823, a storage medium 824, an electronic display 825, a loudspeaker 826, a sensor 827 and a transceiver 828, which are electrically connected to one another by a data bus 829. The apparatus 800 may be one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a sensor device, a wearable device, a health monitor, and a module for one or more of the same.

The electrical storage device 824 is configured to provide electrical power to the other components to enable their functionality. In this respect, the other components may be considered to be the external circuit referred to previously.

The electronic display 825 and loudspeaker 826 are respectively configured to present visual and audible content stored on the apparatus 800 (e.g. stored on the storage medium 824), and the transceiver 828 is configured to transmit and/or receive data to/from one or more other devices via a wired or wireless connection. The sensor 827 is configured to detect one or more physical stimuli or parameters, such as environmental parameters. The measurements taken by the sensor 827 may be presented visually by the electronic display 825 or aurally by the loudspeaker 826. Additionally or alternatively, the measurements taken by the sensor 827 may be transmitted to one or more other devices via the transceiver 828 and/or stored on the storage medium 824.

The processor 823 is configured for general operation of the apparatus 800 by providing signalling to, and receiving signalling from, the other components to manage their operation. The storage medium 824 is configured to store computer code configured to perform, control or enable operation of the apparatus 800. The storage medium 824 may also be configured to store settings for the other components. The processor 823 may access the storage medium 824 to retrieve the component settings in order to manage the operation of the other components.

The processor 823 may be a microprocessor, including an Application Specific Integrated Circuit (ASIC). The storage medium 824 may be a temporary storage medium such as a volatile random access memory. On the other hand, the storage medium 824 may be a permanent storage medium such as a hard disk drive, a flash memory, or a non-volatile random access memory.

Figure 9 shows the main steps 930-931 of a method of making the apparatus described herein. The method generally comprises: forming an energy storage component on an energy harvesting substrate so that the energy storage component is supported by the energy harvesting substrate 930; and configuring the energy harvesting substrate and energy storage component such that electrical energy generated by the energy harvesting substrate in response to a stimulus is used to charge the energy storage component 931. In principle, the energy storage component may be formed on the energy harvesting substrate using a variety of different processes and their corresponding equipment. Some suitable examples of these processes include screen printing, inkjet printing, gravure printing, flexographic printing, spray coating or jetting. Printing processes are particularly well-suited to the battery types and materials described herein (e.g. printable on plastic substrates). To enable printing, the materials used to make the electrodes and electrolyte may be in the form of printable inks. Such inks may be liquids, gels, solutions, suspensions or colloids. After printing, the fluid of the ink may be evaporated or otherwise removed to leave solid layers of material on the substrate.

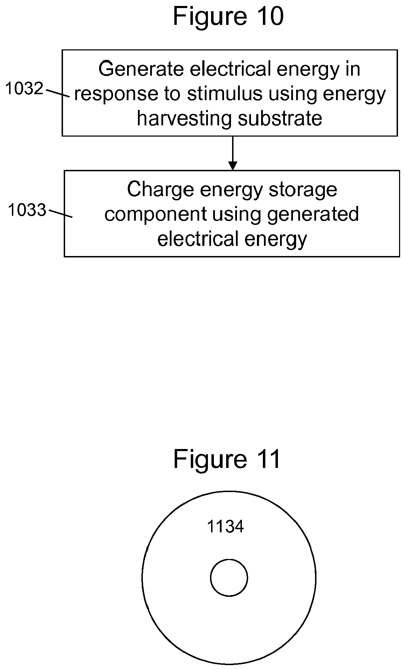

Figure 10 shows the main steps 1032-1033 of a method of using the apparatus described herein. The method generally comprises: generating electrical energy in response to a stimulus using an energy harvesting substrate 1032; and charging an energy storage component using the generated electrical energy 1033.

Figure 11 illustrates schematically a computer/processor readable medium 1134 providing a computer program according to one embodiment. The computer program may comprise computer code configured to perform, control or enable one or more of the method steps 930-931 of Figure 9 and/or one or more of the method steps 1032-1033 of Figure 10. With regards to the method of Figure 9, the computer program may be configured to control the deposition tool (e.g. printing, spraying or jetting system) to form the energy storage component on the energy harvesting substrate. With regards to the method of Figure 10, the computer program may be configured to process or regulate the electrical energy generated by the energy harvesting substrate to enable charging of the energy storage component.

In this example, the computer/processor readable medium 1134 is a disc such as a digital versatile disc (DVD) or a compact disc (CD). In other embodiments, the computer/processor readable medium 1134 may be any medium that has been programmed in such a way as to carry out an inventive function. The computer/processor readable medium 1134 may be a removable memory device such as a memory stick or memory card (SD, mini SD, micro SD or nano SD).

Other embodiments depicted in the figures have been provided with reference numerals that correspond to similar features of earlier described embodiments. For example, feature number 1 can also correspond to numbers 101, 201, 301 etc. These numbered features may appear in the figures but may not have been directly referred to within the description of these particular embodiments. These have still been provided in the figures to aid understanding of the further embodiments, particularly in relation to the features of similar earlier described embodiments.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the disclosure.

While there have been shown and described and pointed out fundamental novel features as applied to different embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment may be incorporated in any other disclosed or described or suggested form or embodiment as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
an energy harvesting substrate configured to generate electrical energy in response to a stimulus; and
an energy storage component printed onto and supported by the energy harvesting substrate,
wherein the energy harvesting substrate and energy storage component are configured such that the electrical energy generated by the energy harvesting substrate in response to the stimulus is used to charge the energy storage component.

2. The apparatus of claim 1, wherein the energy storage component is a graphene oxide-based battery.

3. The apparatus of claim 2, wherein the graphene oxide-based battery comprises first and second electrodes separated by an electrolyte, the electrolyte comprising graphene oxide and having an ionic conductivity which is dependent upon the presence and amount of water.

4. The apparatus of claim 3, wherein the electrolyte is a solid or gel electrolyte.

5. The apparatus of claim 2, wherein the graphene oxide-based battery comprises first and second electrodes, the first electrode comprising graphene oxide and configured to generate protons in the presence of water to produce a potential difference between the first and second electrodes.

6. The apparatus of any of claims 3 to 5, wherein the graphene oxide-based battery is contained within a water-permeable housing configured to enable exposure of the graphene oxide-based battery to water from the surrounding environment.

7. The apparatus of any of claims 3 to 6, wherein the graphene oxide-based battery comprises a water source.

8. The apparatus of claim 7 when dependent upon any of claims 3 to 5, wherein the graphene oxide-based battery is contained within a water-impermeable housing configured to prevent exposure of the graphene oxide-based battery to water from the surrounding environment.

9. The apparatus of any preceding claim, wherein the energy harvesting substrate is one or more of a piezoelectric substrate configured to generate electrical energy in response to stress, a pyroelectric substrate configured to generate electrical energy in response to heat and a solar cell configured to generate electrical energy in response to light.

10. The apparatus of any preceding claim, wherein the energy harvesting substrate is substantially resilient.

11. The apparatus of any preceding claim, wherein the energy harvesting substrate is configured to generate an AC signal in response to the stimulus, and wherein the apparatus comprises a rectifier configured to convert the AC signal into a DC signal which is suitable for charging the energy storage component.

12. The apparatus of claim 11, wherein the rectifier is a half-wave rectifier or a full-wave rectifier.

13. A method of making an apparatus comprising an energy harvesting substrate and an energy storage component, the method comprising:
printing an energy storage component onto an energy harvesting substrate so that the energy storage component is supported by the energy harvesting substrate, the energy harvesting substrate configured to generate electrical energy in response to a stimulus; and
configuring the energy harvesting substrate and energy storage component such that the electrical energy generated by the energy harvesting substrate in response to the stimulus is used to charge the energy storage component.

14. A method of using an apparatus,
the apparatus comprising an energy harvesting substrate configured to generate electrical energy in response to a stimulus, and an energy storage component printed onto and supported by the energy harvesting substrate, wherein the energy harvesting substrate and energy storage component are configured such that the electrical energy generated by the energy harvesting substrate in response to the stimulus is used to charge the energy storage component,
the method comprising charging the energy storage component using the electrical energy generated by the energy harvesting substrate in response to the stimulus.

15. A computer program comprising computer code configured to perform the method of claim 13 or 14.
